# EUROPÄISCHE PATENTANMELDUNG

(11) **EP 4 181 250 A1**
(43) Veröffentlichungstag der Anmeldung: **17.05.2023**
(21) Anmeldenummer: 21208506.2
(22) Anmeldetag: 16.11.2021
(51) Int. Cl.: H01M 8/043, H01M 8/2475, H01M 8/04746, H01M 8/10

(54) **BRENNSTOFFZELLENSYSTEM MIT AKTIVER GEHÄUSESPÜLUNG**

(71) Anmelder: Airbus Operations GmbH, 21129 Hamburg (DE)
(72) Erfinder: SOUKUP, Nikolaus, 21129 Hamburg (DE); HANCOCK, Kurtus, 21129 Hamburg (DE)
(74) Vertreter: LKGLOBAL Lorenz & Kopf PartG mbB Patentanwälte

(57) **Zusammenfassung**

Ein Brennstoffzellensystem weist einen Brennstoffzellenstapel mit einer Kathodenseite und einer Anodenseite, ein den Brennstoffzellenstapel umgebendes Gehäuse, einen Wasserstoffanschluss, einen Zuluftanschluss, einen Gehäusespüllufteinlass, einen Gehäusespülluftauslass, und ein Gehäusespülventil, wobei der Zuluftanschluss mit der Kathodenseite des Brennstoffzellenstapels verbindbar ist, wobei der Wasserstoffanschluss mit der Anodenseite des Brennstoffzellenstapels verbindbar ist, wobei das Gehäusespülventil mit einem Abluftauslass der Kathodenseite verbunden ist und dazu ausgebildet ist, durch Öffnen selektiv Abluft aus der Kathodenseite in einen Innenraum des Gehäuses einzuleiten, um ein darin befindliches, Wasserstoff aufweisendes Gas aus dem Gehäusespülluftauslass herauszuspülen.

## Beschreibung

### Technisches Gebiet

Die vorliegende Beschreibung betrifft ein Brennstoffzellensystem sowie ein Fahrzeug mit einem solchen Brennstoffzellensystem.

### Technischer Hintergrund

Bei Brennstoffzellen mit Polymer-Elektrolyt-Membran treten oftmals bauartbedingte, geringfügige Leckagen auf, durch die ein geringer Volumenstrom von Wasserstoff austreten kann. Ein Innenraum eines die Brennstoffzelle umgebenden Gehäuses oder eine direkt angrenzende Umgebung könnten folglich eine gewisse Wasserstoffkonzentration aufweisen. Für die Sicherheit eines übergeordneten Systems, beispielsweise eines Fahrzeugs, in das die Brennstoffzelle integriert ist, ist es sinnvoll, eine übermäßige Wasserstoffkonzentration zu vermeiden. Hierzu ist bekannt, die Umgebung einer Brennstoffzelle kontinuierlich zu belüften. Dies reicht aus, einen zu erwartenden, geringfügigen Leckagestrom zu kompensieren.

Für Fehlerfälle, in denen ein größerer Volumenstrom entstehen kann, ist kurzfristig eine stärkere Belüftung notwendig. Es ist bekannt, diese durch einen zusätzlichen Lüfter bereitzustellen und die Brennstoffzelle in ihrem Betrieb zu unterbrechen. Weiterhin ist bekannt, einen der Brennstoffzelle zugeordneten, verdichteten Frischluftstrom, der für den Betrieb der Brennstoffzelle notwendig ist, dann ausschließlich oder teilweise zur Belüftung zu verwenden.

### Beschreibung

Es kann als Aufgabe betrachtet werden, ein alternatives Brennstoffzellensystem vorzuschlagen, bei dem eine übermäßige Wasserstoffkonzentration in einem Gehäuse oder einer Umgebung verhindert werden kann.

Diese Aufgabe wird gelöst durch den Gegenstand des unabhängigen Anspruchs 1. Weitere Ausführungsformen ergeben sich aus den abhängigen Ansprüchen sowie aus der folgenden Beschreibung.

Es wird ein Brennstoffzellensystem vorgeschlagen, aufweisend einen Brennstoffzellenstapel mit einer Kathodenseite und einer Anodenseite, ein den Brennstoffzellenstapel umgebendes Gehäuse, einen Wasserstoffanschluss, einen Zuluftanschluss, einen Gehäusespüllufteinlass, einen Gehäusespülluftauslass, und ein Gehäusespülventil, wobei der Zuluftanschluss mit der Kathodenseite des Brennstoffzellenstapels verbindbar ist, wobei der Wasserstoffanschluss mit der Anodenseite des Brennstoffzellenstapels verbindbar ist, wobei das Gehäusespülventil mit einem Abluftauslass der Kathodenseite verbunden ist und dazu ausgebildet ist, durch Öffnen selektiv Abluft aus der Kathodenseite in einen Innenraum des Gehäuses einzuleiten, um ein darin befindliches, Wasserstoff aufweisendes Gas aus dem Gehäusespülluftauslass herauszuspülen.

Der Brennstoffzellenstapel könnte eine Vielzahl von einzelnen Polymer-Elektrolyt-Membran-Brennstoffzellen (PEMFC) aufweisen, bei denen die Membran hierbei eine Anode von einer Kathode trennt. Die Brennstoffzellen sind elektrisch je nach Anforderung insgesamt oder gruppenweise in Reihe und/oder parallelgeschaltet. PEM-Brennstoffzellen sind technisch ausgereift und können zuverlässig auf niedrigeren und höheren Temperaturniveaus betrieben werden. Durch niedrigere Temperaturniveaus sind diese Brennstoffzellen insbesondere für einen dauerhaften Einsatz auch in Fahrzeugen zum Transport von Passagieren bedenkenlos verwendbar.

Zum Betrieb der Brennstoffzelle ist ein kontinuierlicher Zufluss von Edukten notwendig. An der Kathodenseite wird während des normalen Betriebs Frischluft als Oxidant für den Brennstoffzellenprozess zugeführt. Hierzu kann ein Verdichter vorgesehen sein, dem gegebenenfalls ein Zwischenkühler nachgeschaltet ist. An der Anodenseite wird indes Wasserstoff bereitgestellt, der aus einer externen Wasserstoffquelle stammt.

Das Gehäuse umschließt den Brennstoffzellenstapel und führt notwendige Leitungen von außerhalb des Gehäuses durch eine Gehäusewand zu dem Brennstoffzellenstapel. Dies kann eine Wasserstoffleitung, eine Luftleitung, eine Abluftleitung, einen Vorlauf und einen Rücklauf einer Kühlvorrichtung, mindestens eine Stromleitung und gegebenenfalls eine Steuerleitung umfassen. Innerhalb des Gehäuses können neben dem Brennstoffzellenstapel weitere Komponenten vorgesehen sein, wie etwa verschiedene Ventile, einen Wasserabscheider oder ähnliches.

Der Gehäusespülluftauslass könnte an einem oberen Ende des Gehäuses angeordnet sein. Der Begriff "oben" ist dabei derart zu verstehen, dass sich der betreffende Bereich des Gehäuses beim normalen Betrieb des übergeordneten Systems, in das das Brennstoffzellensystem integriert ist, oberhalb anderer Bereiche des Gehäuses befindet. Da Wasserstoff leichter als Luft ist, kann er folglich ohne weiteres durch diesen Gehäusespülluftauslass austreten, ohne zwangsläufig eine aktive Spülung zu erfordern.

Der Gehäusespüllufteinlass könnte an einem unteren Ende des Gehäuses und bevorzugt in einem Bereich angeordnet sein, der dem Gehäusespülluftauslass gegenüberliegt. Der Gehäusespüllufteinlass ist dafür vorgesehen, aktiv Luft in das Gehäuse einzuleiten, um das Innere des Gehäuses zu spülen, sodass eine Wasserstoffkonzentration verringert wird. Beim Spülen entsteht in dem Inneren des Gehäuses ein Überdruck, der zum Ausströmen von Gas aus dem Gehäusespülluftauslass führt.

Das Gehäusespülventil ist vorgesehen, zumindest zwischen einem offenen und einem geschlossenen Zustand geschaltet zu werden. Wird eine Fehlfunktion bekannt, die zu einer erhöhten Wasserstoffkonzentration innerhalb des Gehäuses führt, kann das Gehäusespülventil geöffnet werden und zum aktiven Spülen des Gehäuses führen.

Es ist hierbei vorgesehen, dass das Gehäusespülventil mit dem Auslass der Kathodenseite verbunden ist. Wird das Gehäusespülventil während des Betriebs des Brennstoffzellensystems geöffnet, kann folglich Abluft aus der Brennstoffzelle über das Gehäusespülventil in das Innere des Gehäuses geleitet werden. Die aus der Kathodenseite strömende Abluft ist sauerstoffabgereichert. Aufgrund des hohen Stickstoffanteils der Frischluft ist der Abluftvolumenstrom nur unwesentlich geringer als der Frischluftvolumenstrom. Folglich steht mit der Abluft ein ohnehin existierender, für die Spülung des Gehäuses ausreichender Gasstrom zur Verfügung, der unmittelbar für den genannten Zweck einsetzbar ist und lediglich umgeleitet werden muss. Dabei ist es nicht notwendig, den Volumenstrom aus dem Abluftauslass durch aktive Mittel mit einem höheren Druck zu beaufschlagen, sodass aufgrund des Wegfalls eines zusätzliches Verdichters oder Gebläses ein besonders niedriges zusätzliches Gewicht für die erfindungsgemäße Funktion resultiert. Zudem kann der Brennstoffzellenstapel zumindest temporär, auch mit verringerter Leistung, weiterbetrieben werden, während das Gehäuse verstärkt gespült wird.

Das Brennstoffzellensystem könnte ferner einen in dem Innenraum oder an dem Gehäusespülluftauslass angeordneten Sensor zum Erfassen einer Wasserstoffkonzentration in dem Innenraum aufweisen. Der Sensor könnte an der Brennstoffzelle, an einer Innenseite des Gehäuses oder einer anderen Komponente innerhalb des Gehäuses angeordnet sein. Durch kontinuierliche Messung der Wasserstoffkonzentration kann erkannt werden, wann eine Leckage ein zu tolerierendes, übliches Maß überschreitet. Hieraus kann ein Steuerbefehl für das Gehäusespülventil generiert werden, sodass die Kathodenabluft zur Spülung in das Gehäuse eingeleitet werden kann. Der Sensor könnte weiterhin auch an dem Gehäusespülluftauslass angeordnet sein. Das Gas, welches kontinuierlich aus dem Gehäusespülluftauslass strömt, weist eine Konzentration an Wasserstoff auf, die mit einem geringen zeitlichen Versatz der Konzentration im Innern des Gehäuses entspricht. Die Platzierung des Sensors könnte hierdurch erleichtert werden.

Das Brennstoffzellensystem könnte ferner eine Steuereinheit aufweisen, die mit dem Gehäusespülventil gekoppelt ist, wobei die Steuereinheit dazu ausgebildet ist, das Gehäusespülventil bedarfsweise zum Öffnen anzusteuern. Die Steuereinheit muss nicht zwangsläufig eine dedizierte Steuereinheit für den Zweck der Spülung des Gehäuses sein, sondern die Funktion des Ansteuerns des Gehäusespülventils kann in eine Steuereinheit integriert sein, die für die eigentliche Funktion des Brennstoffzellensystems vorgesehen ist. Sie kann beispielsweise dazu ausgebildet sein, eine Luftzufuhr und eine Wasserstoffzufuhr sowie eine mit dem Brennstoffzellenstapel gekoppelte Kühlvorrichtung zu steuern. Es ist sinnvoll, eine Steuereinheit zu verwenden, die eine "Balance of Plant" steuert, zu der alle Komponenten eines Brennstoffzellensystems gehören, ohne den Brennstoffzellenstapel selbst.

Die Steuereinheit könnte dazu ausgebildet sein, eine Luftzufuhr und eine Wasserstoffzufuhr zu dem Brennstoffzellenstapel und damit die Leistung des Brennstoffzellenstapels zu steuern, wobei die Steuereinheit dazu ausgebildet sein könnte, das Brennstoffzellensystem mit einer reduzierten Leistung zu betreiben, wenn das Gehäusespülventil geöffnet ist. Die Steuerung der Luft- und Wasserstoffzufuhr kann etwa durch entsprechende Ventile realisiert sein. Ein oder mehrere Wasserstoffventile beeinflussen den Zufluss von Wasserstoff, während ein oder mehrere Ventile den Zu- oder Abfluss von Luft bzw. Abluft beeinflussen. Durch den fortwährenden Betrieb des Brennstoffzellensystems können auch kritische Anwendungen weiterhin mit Strom versorgt werden, beispielsweise in einem Fahrzeug. Durch Reduktion der Leistung kann der Zufluss des Wasserstoffs in das Brennstoffzellensystem reduziert werden.

Die Steuereinheit könnte mit dem Sensor gekoppelt sein und dazu ausgebildet sein, die Wasserstoffkonzentration durch Auslesen des Sensors kontinuierlich zu erfassen, mit einem tolerierbaren Wert der Wasserstoffkonzentration zu vergleichen und bei Überschreiten des tolerierbaren Werts das Gehäusespülventil zu öffnen. Das Spülen des Gehäuses kann demzufolge vollautomatisch erfolgen. Gleichzeitig ist denkbar, beim Feststellen einer solchen Konzentration ein Signal zu generieren und auszugeben, um einen Benutzer zu warnen. Dies kann in Form einer optischen oder akustischen Anzeige erfolgen, alternativ oder zusätzlich dazu auch als Eintrag in ein Fehlerprotokoll, eine Wartungsliste oder dergleichen. Ist das Brennstoffzellensystem in ein Fahrzeug integriert, kann das entsprechende Signal über Telemetriedaten unmittelbar nach außen übertragen werden, sodass eine unmittelbare Wartung des Fahrzeugs zum Beheben der Leckage ermöglicht wird.

Das Gehäusespülventil könnte dazu ausgebildet sein, kontinuierlich zwischen einem geschlossenen Zustand und einem geöffneten Zustand verstellt zu werden, um dem Gehäusespüllufteinlass einen variablen Volumenstrom zuzuführen. Die Stärke der Spülung des Gehäuses kann etwa von der Wasserstoffkonzentration abhängig gemacht werden.

Die Steuereinheit könnte weiterhin dazu ausgebildet sein, das Gehäusespülventil in einen Belüftungszustand zu bringen, wenn die Wasserstoffkonzentration den tolerierbaren Wert nicht übersteigt, wobei das Gehäusespülventil in dem Belüftungszustand einen Öffnungsgrad von 10% oder weniger aufweist. Ein geringer Anteil der Kathodenabluft könnte daher kontinuierlich abgezweigt und zur Zwangsbelüftung des Gehäuses verwendet werden.

Das Brennstoffzellensystem könnte ferner eine separate Gehäusebelüftungsöffnung zum kontinuierlichen Belüften des Gehäuses aufweisen. Diese kann in einem unteren Bereich des Gehäuses vorgesehen sein. Es ist sinnvoll, das Gehäuse durch einen Schornsteineffekt zu belüften, indem der Gehäusespülauslass in einem höheren Bereich liegt als die Gehäusebelüftungsöffnung. Strömt aufgrund der geringen Dichte von Wasserstoff ein Gasgemisch aus dem Inneren des Gehäuses über den Gehäusespülauslass aus, kann Luft aus der Umgebung durch die Gehäusebelüftungsöffnung nachströmen. Die Wasserstoffkonzentration in dem Gehäuse wird dadurch ohne aktive Mittel verringert.

Es ist denkbar, dass zwischen dem Gehäusespülventil und dem Abluftauslass ein Wasserabscheider angeordnet ist, der dazu ausgebildet ist, Abluft aus der Kathodenseite zu entfeuchten. Die zum Spülen des Gehäuses verwendete Abluft weist eine reduzierte Feuchtigkeit auf. Diese kann daher neben der aktiven Spülung des Gehäuses auch für eine kontinuierliche Belüftung verwendet werden, ohne erhöhte Korrosionsgefahr.

Die Erfindung betrifft ferner ein Fahrzeug, aufweisend mindestens ein Brennstoffzellensystem nach der vorangehenden Beschreibung.

Das Fahrzeug könnte ein Flugzeug sein. Das Brennstoffzellensystem könnte zur Bereitstellung elektrischer Leistung Triebwerksgeneratoren ergänzen oder ersetzen.

### Kurze Beschreibung der Figuren

Nachfolgend wird anhand der beigefügten Zeichnungen näher auf Ausführungsbeispiele eingegangen. Die Darstellungen sind schematisch und nicht maßstabsgetreu. Gleiche Bezugszeichen beziehen sich auf gleiche oder ähnliche Elemente. Es zeigen:
- Fig. 1-3: schematische Darstellungen eines Brennstoffzellensystems in mehreren Varianten.
- Fig. 4: ein Flugzeug mit einem darin angeordneten Brennstoffzellensystem.

### Detaillierte Beschreibung von Ausführungsbeispielen

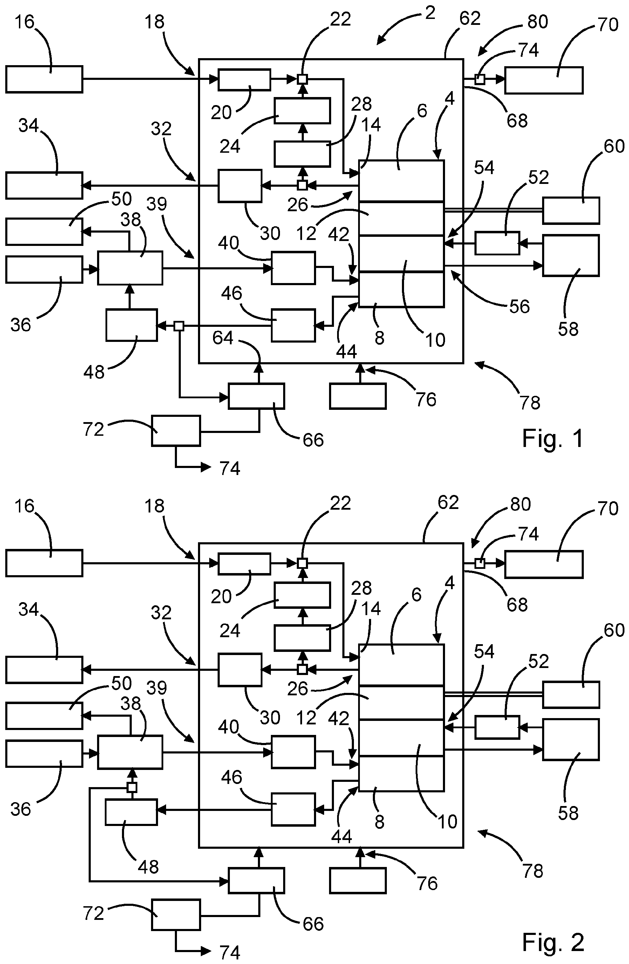

Fig. 1 zeigt ein Brennstoffzellensystem 2 mit einem Brennstoffzellenstapel 4, der eine Anodenseite 6, eine Kathodenseite 8, einen Wärmeübertrager 10 sowie ein elektrisches Anschlussterminal 12 umfasst. Es ist hierbei angemerkt, dass der Brennstoffzellenstapel 4 hier lediglich schematisch dargestellt ist und tatsächlich aus einer Reihe von Brennstoffzellen besteht, welche mittels Bipolarplatten elektrisch miteinander verbunden und mit Edukten versorgt werden.

Die Anodenseite 6 wird an einem Anodeneinlass 14 mit Wasserstoff versorgt, der aus einer Wasserstoffquelle 16 stammt, welche über einen Wasserstoffanschluss 18 mit dem Brennstoffzellensystem 2 verbunden ist. An den Wasserstoffanschluss 18 schließen sich ein oder mehrere Wasserstoffventile 20 an, die dazu ausgebildet sind, durch Ansteuerung dosiert frischen Wasserstoff an den Anodeneinlass 14 zu liefern. In einem Mischpunkt 22 wird einem Wasserstoffrestgas aus einem Anodenauslass 26 frischer Wasserstoff zugeführt. Der Mischpunkt 22 könnte auch als eine Strahlpumpe ausgeführt werden. Hierzu ist ein Rezirkulationsgebläse 24 mit dem Anodenauslass 26 gekoppelt und realisiert damit einen Rezirkulationskreis. Dabei ist zusätzlich ein Wasserabscheider 28 zwischengeschaltet, der das Anodenabgas zumindest teilweise entfeuchtet bzw. Kondensat aus einer Zuleitung abscheidet.

Ein Purge-Ventil 30, das mit dem Anodenauslass 26 gekoppelt ist, kann zum bedarfsweisen Spülen der Anodenseite 6 genutzt werden, insbesondere um Stickstoff aus der Brennstoffzelle zu entfernen. Das Purge-Ventil 30 ist hierfür mit einem Wasserstoff-Purge-Auslass 32 verbunden, der das gespülte Gas einem Purge-Auslass 34 zuführt.

Die Kathodenseite 8 wird mit Frischluft 36 versorgt, die über einen Befeuchter 38 vorbefeuchtet wird und durch einen Zuluftanschluss 39 in ein erstes Kathodenschaltventil 40 an die Kathodenseite 8 in einen Kathodeneinlass 42 geleitet wird.

Abluft gerät aus einem Kathodenauslass 44 und über ein zweites Kathodenschaltventil 46 aus der Kathodenseite 8 hinaus und kann über einen Wasserabscheider 48 Wasser abscheiden. Das darin abgeschiedene Wasser kann dem Befeuchter 38 zugeführt werden, sodass die Frischluft entsprechend befeuchtet wird. Die entfeuchtete Abluft verlässt das System über einen Abluftauslass 50.

Der Wärmeübertrager 10, der beispielsweise in die vorangehend genannten Bipolarplatten integriert ist, wird über eine Kältemittelpumpe 52 mit Kältemittel an einem Kältemitteleingang 54 versorgt. Der Brennstoffzellenstapel 4 erwärmt dadurch das Kältemittel. An einem Kältemittelausgang 56 strömt das erwärmte Kältemittel aus und gibt Wärme an einem Wärmetauscher 58 nach außen ab. Der Wärmetauscher 58 kann optional über einen Lüfter zwangsbelüftet werden.

Das elektrische Terminal 12 versorgt elektrische Verbraucher 60 mit elektrischer Leistung. Hierbei kann ein hier nicht gezeigter Inverter zwischengeschaltet sein, der die von dem Brennstoffzellenstapel 4 gelieferte Spannung in eine für den Anwendungszweck angepasste Höhe wandelt.

Das Brennstoffzellensystem 2 weist ferner ein Gehäuse 62 auf, das den Brennstoffzellenstapel 4, die gezeigten Ventile 20, 30, 40 und 46, das Rezirkulationsgebläse 24 und den vorgeschalteten Wasserabscheider 28 umschließt. Das Gehäuse 62 könnte bevorzugt so kompakt wie möglich gestaltet sein und einen nicht unnötig großen freien Innenraum bereitstellen. Das Gehäuse 62 weist einen Gehäusespüllufteinlass 64 auf, der mit einem Gehäusespülventil 66 verbunden ist. Dieses ist mit dem Kathodenauslass 44 verbunden, wobei beispielhaft eine Verbindung stromaufwärts des Wasserabscheiders 48 vorgesehen ist. Das Gehäusespülventil 66 kann geöffnet werden, wenn innerhalb des Gehäuses 62 eine Wasserstoffkonzentration einen vorbestimmten Wert überschreitet. Durch das Öffnen des Gehäusespülventils 66 wird Abluft aus der Kathodenseite 8 aktiv in das Gehäuse 62 eingeleitet und führt zum Herausspülen des darin befindlichen Gases aus einem Gehäusespülluftauslass 68. Diese könnte in einer entsprechenden Spülauslassleitung 70 münden.

Eine Steuereinheit 72 kann mit dem Gehäusespülventil 66 verbunden sein und dieses entsprechend ansteuern. Weiterhin kann die Steuereinheit 72 mit einem Sensor 74 verbunden sein, der beispielhaft an dem Gehäusespülluftauslass 68 angeordnet ist. Damit ist die Steuereinheit 72 in der Lage, eine Konzentration des Wasserstoffs innerhalb des Gehäuses 62 zu erfassen und mit einem vorbestimmten Maximalwert zu vergleichen.

Zur kontinuierlichen Belüftung des Gehäuses 62 zur Kompensation leichter, nicht zu verhindernder Leckagen des Brennstoffzellenstapels 4, ist eine Gehäusebelüftungsöffnung 76 vorgesehen, die an einer Unterseite 78 des Gehäuses 62 angeordnet ist. Der Gehäusespülluftauslass 68 ist indes an einer Oberseite 80 angeordnet, sodass aufgrund der geringen Dichte des Wasserstoffs dieser bei entsprechender Nachströmung von Luft über die Belüftungsöffnungen 76 kontinuierlich aus dem Gehäusespülluftauslass 68 strömen kann.

In Fig. 2 ist eine leichte Abwandlung des Brennstoffzellensystems 2 gezeigt. Hier ist das Gehäusespülventil 66 stromabwärts des Wasserabscheiders 48 mit dem Kathodenauslass 44 gekoppelt. Folglich ist die in das Innere des Gehäuses 62 eingeleitete Luft entfeuchtet, bzw. das Kondensat aus einer Zuleitung abgeschieden.

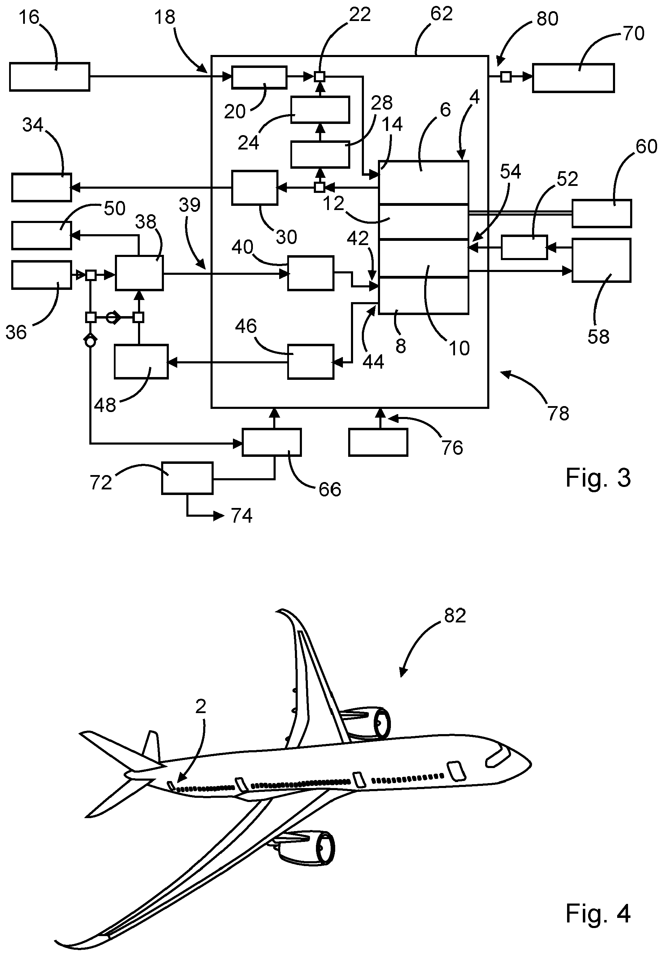

Wie in Fig. 3 dargestellt ist zudem denkbar, eine Kombination aus Abluft aus der Kathodenseite 8 und Frischluft zum Spülen des Gehäuses 62 einzusetzen. Die dem System 2 zugeführte Frischluft 36 könnte zusätzlich zu dem Kathodenabgas in den Gehäusespüllufteinlass 64 eingeleitet werden. Dadurch könnte der Spülluftvolumenstrom deutlich erhöht werden. Wird die Frischluft 36 über einen Verdichter bereitgestellt, der beispielsweise elektrisch betrieben wird, kann dieser bei Ausfall des Brennstoffzellenstapels 4 weiter betrieben werden und kontinuierlich Luft bereitstellen. Wird der Verdichter mit Ausfall oder Abschaltung des Brennstoffzellenstapels 4 ebenso abgestellt, könnte aufgrund der Massenträgheit von Verdichterlaufrädern nach dem Abschalten eine gewisse Menge von Frischluft bereitgestellt und zur Spülung des Gehäuses 62 genutzt werden.

Schließlich zeigt Fig. 4 ein Flugzeug 82, in das ein Brennstoffzellensystem 2 installiert ist.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 2: Brennstoffzellensystem
- 4: Brennstoffzellenstapel
- 6: Anodenseite
- 8: Kathodenseite
- 10: Wärmeübertrager
- 12: Anschlussterminal
- 14: Anodeneinlass
- 16: Wasserstoffquelle
- 18: Wasserstoffanschluss
- 20: Wasserstoffventile
- 22: Strahlpumpe
- 24: Rezirkulationsgebläse
- 26: Anodenauslass
- 28: Wasserabscheider
- 30: Ventil
- 32: Wasserstoff-Purge-Auslass
- 34: Purge-Auslass
- 36: Frischluft
- 38: Befeuchter
- 39: Zuluftanschluss
- 40: erstes Kathodenschaltventil
- 42: Kathodeneinlass
- 44: Kathodenauslass
- 46: zweites Kathodenschaltventil
- 48: Wasserabscheider
- 50: Abluftauslass
- 52: Kältemittelpumpe
- 54: Kältemitteleingang
- 56: Kältemittelausgang
- 58: Wärmetauscher
- 60: elektrischer Verbraucher
- 62: Gehäuse
- 64: Gehäusespüllufteinlass
- 66: Gehäusespülventil
- 68: Gehäusespülluftauslass
- 70: Spülauslassleitung
- 72: Steuereinheit
- 74: Sensor
- 76: Gehäusebelüftungsöffnung
- 78: Unterseite
- 80: Oberseite
- 82: Flugzeug

## Patentansprüche

1. Brennstoffzellensystem (2), aufweisend
- einen Brennstoffzellenstapel (4) mit einer Kathodenseite (8) und einer Anodenseite (6),
- ein den Brennstoffzellenstapel (4) umgebendes Gehäuse (62),
- einen Wasserstoffanschluss (18),
- einen Zuluftanschluss (39),
- einen Gehäusespüllufteinlass (64),
- einen Gehäusespülluftauslass (68), und
- ein Gehäusespülventil (66),
wobei der Zuluftanschluss (39) mit der Kathodenseite (8) des Brennstoffzellenstapels (4) verbindbar ist,
wobei der Wasserstoffanschluss (18) mit der Anodenseite (6) des Brennstoffzellenstapels (4) verbindbar ist,
wobei das Gehäusespülventil (66) mit einem Abluftauslass (50) der Kathodenseite (8) verbunden ist und dazu ausgebildet ist, durch Öffnen selektiv Abluft aus der Kathodenseite (8) in einen Innenraum des Gehäuses (62) einzuleiten, um ein darin befindliches, Wasserstoff aufweisendes Gas aus dem Gehäusespülluftauslass (68) herauszuspülen.

2. Brennstoffzellensystem (2) nach Anspruch 1,
ferner aufweisend einen in dem Innenraum oder an dem Gehäusespülluftauslass (68) angeordneten Sensor (74) zum Erfassen einer Wasserstoffkonzentration in dem Innenraum.

3. Brennstoffzellensystem (2) nach einem der vorhergehenden Ansprüche, ferner aufweisend eine Steuereinheit (72), die mit dem Gehäusespülventil (66) gekoppelt ist,
wobei die Steuereinheit (72) dazu ausgebildet ist, das Gehäusespülventil (66) bedarfsweise zum Öffnen anzusteuern.

4. Brennstoffzellensystem (2) nach Anspruch 3,
wobei die Steuereinheit (72) dazu ausgebildet ist, eine Luftzufuhr und Wasserstoffzufuhr zu dem Brennstoffzellenstapel (4) und damit die Leistung des Brennstoffzellenstapels (4) zu steuern, und
wobei die Steuereinheit (72) dazu ausgebildet ist, das Brennstoffzellensystem (2) mit einer reduzierten Leistung zu betreiben, wenn das Gehäusespülventil (66) geöffnet ist.

5. Brennstoffzellensystem (2) nach Anspruch 2 und 3 oder 4,
wobei die Steuereinheit (72) mit dem Sensor (74) gekoppelt ist und dazu ausgebildet ist, die Wasserstoffkonzentration durch Auslesen des Sensors (74) kontinuierlich zu erfassen, mit einem tolerierbaren Wert der Wasserstoffkonzentration zu vergleichen und bei Überschreiten des tolerierbaren Werts das Gehäusespülventil (66) zu öffnen.

6. Brennstoffzellensystem (2) nach einem der vorhergehenden Ansprüche,
wobei das Gehäusespülventil (66) dazu ausgebildet ist, kontinuierlich zwischen einem geschlossenen Zustand und einem geöffneten Zustand verstellt zu werden, um dem Gehäusespüllufteinlass (64) einen variablen Volumenstrom zuzuführen.

7. Brennstoffzellensystem (2) nach Anspruch 5 und 6,
wobei die Steuereinheit (72) dazu ausgebildet ist, das Gehäusespülventil (66) in einen Belüftungszustand zu bringen, wenn die Wasserstoffkonzentration den tolerierbaren Wert nicht übersteigt, und
wobei das Gehäusespülventil (66) in dem Belüftungszustand einen Öffnungsgrad von 10% oder weniger aufweist.

8. Brennstoffzellensystem (2) nach einem der vorhergehenden Ansprüche, ferner aufweisend eine separate Gehäusebelüftungsöffnung (76) zum
kontinuierlichen Belüften des Gehäuses (62).

9. Brennstoffzellensystem (2) nach einem der vorhergehenden Ansprüche,
wobei zwischen dem Gehäusespülventil (66) und dem Abluftauslass (50) ein Wasserabscheider (28) angeordnet ist, der dazu ausgebildet ist, Abluft aus der Kathodenseite (8) zu entfeuchten.

10. Fahrzeug (82), aufweisend mindestens ein Brennstoffzellensystem (2) nach einem der vorhergehenden Ansprüche.

11. Fahrzeug (82) nach Anspruch 10, wobei das Fahrzeug (82) ein Flugzeug (82) ist.
